# EUROPEAN PATENT APPLICATION

(11) **EP 4 318 089 A1**
(43) Date of publication of application: **07.02.2024**
(21) Application number: 21935239.0
(22) Date of filing: 28.12.2021
(51) Int. Cl.: G02C 7/00, G02B 1/115, G02B 1/14, G02B 1/18

(54) **EYEGLASS LENS AND EYEGLASSES**

(30) Priority: 31.03.2021 JP 2021062100
(71) Applicant: Hoya Lens Thailand Ltd., Pathumthani 12130 (TH)
(72) Inventor: ISHIZAKI, Takako, Tokyo 160-8347 (JP); KONO, Shigetoshi, Tokyo 160-8347 (JP)
(74) Representative: Hoffmann Eitle
(86) International application number: PCT/JP2021/048729
(87) International publication number: WO 2022/209092

(57) **Abstract**

Provided is a spectacle lens having a lens substrate and an inorganic layer and further having a metal-containing layer between the lens substrate and the inorganic layer, in which a metal that is contained in the metal-containing layer is one or more metals selected from the group consisting of silver and platinum.

## Description

### [Technical Field]

The present invention relates to a spectacle lens and spectacles.

### [Background Art]

PTL 1 discloses an antibacterial synthetic resin compact obtained by coating a synthetic resin surface with an antibacterial surface coating agent containing a zeolite which is ion-substituted with silver ions while having a polymerizable compound having at least two (meth)acryloyloxy groups in the molecule as a main component and curing the synthetic resin.

### [Citation List]

### [Patent Literature]

[PTL 1] Japanese Patent Application Publication No. H09-327622

### [Summary of Invention]

### [Technical Problem]

PTL 1 discloses that antibacterial activity is given by the surface coating agent to synthetic resin compacts that are used in building materials, various indoor structural materials, signboards, displays, lighting equipment and the like.

In recent years, there have been increasing antibacterial needs. Under such circumstances, if it is possible to give spectacle lenses a function capable of suppressing the proliferation of bacteria (that is, antibacterial activity), it is possible to enhance the added value of the spectacle lenses. Furthermore, spectacle lenses are exposed to light and moisture while being combined into spectacles and used by spectacle wearers for a long term. Therefore, it is desirable that spectacle lenses be excellent in terms of light fastness and water resistance of antibacterial activity.

An object of one aspect of the present invention is to provide a spectacle lens being excellent in terms of light fastness and water resistance of antibacterial activity.

### [Solution to Problem]

One aspect of the present invention relates to
a spectacle lens having a lens substrate and an inorganic layer and further having
a metal-containing layer between the lens substrate and the inorganic layer,
in which a metal that is contained in the metal-containing layer is one or more metals selected from the group consisting of silver and platinum.

Silver and platinum are components capable of exhibiting antibacterial activity. The spectacle lens contains such components in the layer that is positioned below the inorganic layer. This makes it possible for the spectacle lens to exhibit excellent light fastness and water resistance of antibacterial activity.

### [Advantageous Effects of Invention]

According to one aspect of the present invention, it is possible to provide a spectacle lens being excellent in terms of light fastness and water resistance of antibacterial activity.

### [Brief Description of Drawings]

[Fig. 1]

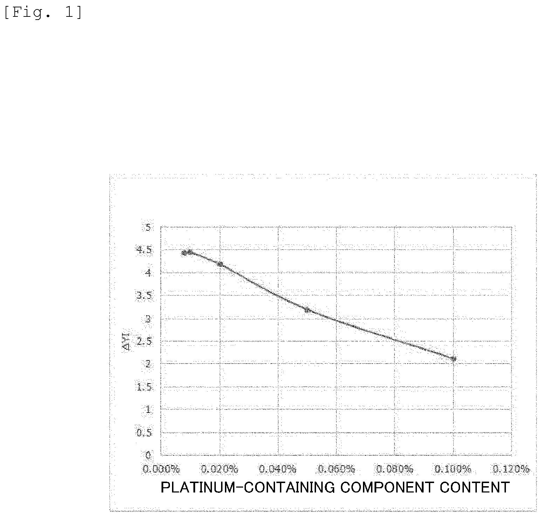

Fig. 1 is a graph of spectacle lenses containing a silver-containing component and containing a platinum-containing component in a different content in which ΔYI is plotted with respect to the contents of the platinum-containing component.

### [Description of Embodiments]

### [Spectacle Lens]

The spectacle lens will be described in detail next.

### <Metal-Containing Layer>

A metal-containing layer of the spectacle lens contains one or more metals selected from the group consisting of silver and platinum as a metal, can contain only silver or only platinum between silver and platinum in one aspect and can contain silver and platinum in another aspect. Examples of the existence form of the metal in the metal-containing layer may include a form of a pure metal or an alloy, a form of an inorganic compound or an organic compound, a form of a metal ion and the like. The inorganic compound can be, for example, an inorganic acid compound. Further, examples of the existence form of the metal in the metal-containing layer also include a form of a metal complex. In the metal-containing layer, the metal can exist in a plurality of existence forms. For example, silver can be considered to be at least partially ionized by oxidation and thus capable of exhibiting antibacterial activity.

The metal-containing layer contains either or both of a silver-containing component and a platinum-containing component. The silver-containing component and the platinum-containing component are as described above regarding the existence form of the metal in the metal-containing layer. The metal-containing layer positioned between a lens substrate and an inorganic layer in the spectacle lens can contain only one of the silver-containing component and the platinum-containing component in one aspect, which makes it possible to exhibit antibacterial activity and makes it possible to exhibit excellent light fastness and water resistance for antibacterial activity. Further, in one aspect, the metal-containing layer can contain both the silver-containing component and the platinum-containing component. This makes it possible to suppress the discoloration of the spectacle lens caused by long-term use. Regarding this, in a case where silver is contained in the metal-containing layer, it is conceivable that the progress of the oxidation of silver over time causes the yellowing of the metal-containing layer, and thus the present inventors presume that platinum exhibits an action of suppressing the progress of the oxidation of silver and is thus capable of suppressing yellowing. In a case where the metal-containing layer contains the silver-containing component, only one or two or more silver-containing components can be contained. The same applies to a case where the metal-containing layer contains the platinum-containing component.

The metal-containing layer is a layer that is positioned between the lens substrate and the inorganic layer and can be a layer provided directly on the lens substrate or indirectly through one or more other layers provided on the lens substrate by a film formation method selected from the group consisting of a wet-type film formation method and a dry-type film formation method. When the total amount of film formation materials (here, in a case where a solvent is used during film formation, the solvent is excluded) is set to 100 mass%, the content of a metal-containing component selected from the group consisting of the silver-containing component and the platinum-containing component (in a case where the silver-containing component and the platinum-containing component are contained, the total content thereof) can be set to, for example, 0.010 mass% or more, 0.030 mass% or more or 0.050 mass% or more and can be set to, for example, 1.500 mass% or less, 1.300 mass% or less or 1.000 mass% or less. The silver-containing component can be used singly as the film formation material in one aspect. In another aspect, a mixture of the silver-containing component and one or more other components can be used as the film formation material. The same applies to the platinum-containing component. In a case where the silver-containing component and the platinum-containing component are jointly used, the amount of the platinum-containing component that can be used is, for example, 0.01 times to 10 times the amount of the silver-containing component based on the mass. The silver-containing component and the platinum-containing component can be used as the film formation material in, for example, a particle form. The particle sizes thereof can be, for example, 1 nm or more and 20 nm or less. In the present invention and the present description, "particle size" is an average particle size and can be, for example, an arithmetic average of the particle sizes of about five particles to 10 particles. In a case where the metal-containing component is used as the film formation material in an inorganic oxide particle form, such particles can be particles composed of only one inorganic oxide and can also be particles containing two or more inorganic oxides. In the particles containing two or more inorganic oxides, at least one inorganic oxide can be a silver oxide and/or a platinum oxide.

The inorganic layer, which will be described in detail, can be a multilayer film of two or more inorganic layers. Such a multilayer film can be an antireflection film having a property of preventing the reflection of light having a specific wavelength or light in a specific wavelength range or a reflection film having a property of reflecting light having a specific wavelength or light in a specific wavelength range. Specific examples of a layer that is provided between the above-described multilayer film and the lens substrate in the spectacle lens may include the following layers. One or more of those layers can be the metal-containing layers.

### (Cured Layer)

The spectacle lens may have a cured layer obtained by curing a curable composition, which is ordinarily called a hard coat layer, between the lens substrate and the inorganic layer. In one aspect, such a cured layer may be the metal-containing layer.

The cured layer can be obtained by curing a curable composition containing, for example, silicon oxide particles (hereinafter, also referred to as "component (A)") and a silane compound (hereinafter, also referred to as "component (B)"). The curable composition may further contain a polyfunctional epoxy compound (hereinafter, also referred to as "component (C)").

From the viewpoint of achieving both abrasion resistance and optical properties, the particle size of the silicon oxide particles of the component (A) is preferably in the range of 5 nm to 30 nm.

The component (B) is a silane compound, preferably a silane compound having a hydrolyzable group and more preferably a silane coupling agent containing an organic group that bonds to silicon atoms and a hydrolyzable group.

Examples of the hydrolyzable group include an alkoxy group, an aryloxy group or a hydroxy group, and an alkoxy group is preferable.

The silane compound is preferably an organosilicon compound represented by the following general formula (I) or a hydrolyzate thereof.

(R¹)ₐ(R³)_{b}Si(OR²)_{4-(a+b)} ... (I)

In the general formula (I), a is 0 or 1 and b is 0 or 1, and, preferably, a is 1 and b is 0 or 1.

R¹ represents an organic group having a functional group such as an epoxy group such as a glycidoxy group, a vinyl group, a methacryloxy group, an acryloxy group, a mercapto group, an amino group and a phenyl group, and preferably represents an organic group having an epoxy group. The functional group may directly bond to a silicon atom or may be indirectly bond through a linking group such as an alkylene group.

R₂ is, for example, a hydrogen atom, an alkyl group, an acyl group or an aryl group and preferably an alkyl group.

The alkyl group represented by R₂ is, for example, a linear or branched alkyl group having 1 to 4 carbon atoms, specific examples thereof include a methyl group, an ethyl group, a propyl group, a butyl group, and the like, and a methyl group or an ethyl group is preferable.

The acyl group represented by R₂ is, for example, an acryl group having 1 to 4 carbon atoms, and specific example thereof include an acetyl group, a propionyl group, an oleyl group, a benzoyl group, and the like.

The aryl group represented by R₂ is, for example, an aryl group having 6 to 10 carbon atoms, and specific example thereof include a phenyl group, a xylyl group, a tolyl group, and the like.

R³ is an alkyl group or an aryl group.

The alkyl group represented by R³ is, for example, a linear or branched alkyl group having 1 to 6 carbon atoms, and specific examples thereof include a methyl group, an ethyl group, a propyl group, a butyl group, a pentyl group, a hexyl group, and the like.

The aryl group represented by R³ is, for example, an aryl group having 6 to 10 carbon atoms, and specific examples thereof include a phenyl group, a xylyl group, a tolyl group, and the like.

Specific examples of the component (B) may include the following silane compounds. Glycidoxymethyltrimethoxysilane, glycidoxymethyltriethoxysilane, α-glycidoxyethyltriethoxysilane, β-glycidoxyethyltrimethoxysilane, β-glycidoxyethyltriethoxysilane, α-glycidoxypropyltrimethoxysilane, α-glycidoxypropyltriethoxysilane, β-glycidoxypropyltrimethoxysilane, β-glycidoxypropyltriethoxysilane, γ-glycidoxypropyltrimethoxysilane, γ-glycidoxypropyltriethoxysilane, γ-glycidoxypropyltripropoxysilane, γ-glycidoxypropyltributoxysilane, γ-glycidoxypropyltriphenoxysilane, α-glycidoxybutyltrimethoxysilane, α-glycidoxybutyltriethoxysilane, β-glycidoxybutyltrimethoxysilane, β-glycidoxybutyltriethoxysilane, γ-glycidoxybutyltrimethoxysilane, γ-glycidoxybutyltriethoxysilane, δ-glycidoxybutyltrimethoxysilane, δ-glycidoxybutyltriethoxysilane, (3,4-epoxycyclohexyl)methyltrimethoxysilane, (3,4-epoxycyclohexyl)methyltriethoxysilane, β-(3,4-epoxycyclohexyl)ethyltrimethoxysilane, β-(3,4-epoxycyclohexyl)ethyltriethoxysilane, β-(3,4-epoxycyclohexyl)ethyltripropoxysilane, β-(3,4-epoxycyclohexyl)ethyltributoxysilane, β-(3,4-epoxycyclohexyl)ethyltriphenoxysilane, γ-(3,4-epoxycyclohexyl)propyltrimethoxysilane, γ-(3,4-epoxycyclohexyl)propyltriethoxysilane, δ-(3,4-epoxycyclohexyl)butyltrimethoxysilane, δ-(3,4-epoxycyclohexyl)butyltriethoxysilane, glycidoxymethylmethyldimethoxysilane, glycidoxymethylmethyldiethoxysilane, α-glycidoxyethylmethyldimethoxysilane, α-glycidoxyethylmethyldiethoxysilane, β-glycidoxyethylmethyldimethoxysilane, β-glycidoxyethylmethyldiethoxysilane, α-glycidoxypropylmethyldimethoxysilane, α-glycidoxypropylmethyldiethoxysilane, β-glycidoxypropylmethyldimethoxysilane, β-glycidoxypropylmethyldiethoxysilane, γ-glycidoxypropylmethyldimethoxysilane, γ-glycidoxypropylmethyldiethoxysilane, γ-glycidoxypropylmethyldipropoxysilane, γ-glycidoxypropylmethyldibutoxysilane, γ-glycidoxypropylmethyldiphenoxysilane, γ-glycidoxypropylethyldimethoxysilane, γ-glycidoxypropylethyldiethoxysilane, γ-glycidoxypropylvinyldimethoxysilane, γ-glycidoxypropylvinyldiethoxysilane, γ-glycidoxypropylphenyldimethoxysilane, γ-glycidoxypropylphenyldiethoxysilane, methyl silicate, ethyl silicate, n-propyl silicate, i-propyl silicate, n-butyl silicate, sec-butyl silicate, t-butyl silicate, tetraacetoxysilane, methyltrimethoxysilane, methyltriethoxysilane, methyltripropoxysilane, methyltriacetoxysilane, methyltributoxysilane, methyltripropoxysilane, methyltriamyloxysilane, methyltriphenoxysilane, methyltribenzyloxysilane, methyltriphenethyloxysilane, ethyltrimethoxysilane, ethyltriethoxysilane, vinyltrimethoxysilane, vinyltriacetoxysilane, vinyltrimethoxyethoxysilane, phenyltrimethoxysilane, phenyltriethoxysilane, phenyltriacetoxysilane, γ-chloropropyltrimethoxysilane, γ-chloropropyltriethoxysilane, γ-chloropropyltriacetoxysilane, 3,3,3-trifluoropropyltrimethoxysilane, γ-methacryloxypropyltrimethoxysilane, γ-mercaptopropyltrimethoxysilane, γ-mercaptopropyltriethoxysilane, β-cyanoethyltriethoxysilane, chloromethyltrimethoxysilane, chloromethyltriethoxysilane, N-(β-aminoethyl) γ-aminopropyltrimethoxysilane, N-(β-aminoethyl) γ-aminopropylmethyldimethoxysilane, γ-aminopropylmethyldimethoxysilane, N-(β-aminoethyl) γ-aminopropyltriethoxysilane, N-(β-aminoethyl) γ-aminopropylmethyldiethoxysilane, dimethyldimethoxysilane, phenylmethyldimethoxysilane, dimethyldiethoxysilane, phenylmethyldiethoxysilane, γ-chloropropylmethyldimethoxysilane, γ-chloropropylmethyldiethoxysilane, dimethyldiacetoxysilane, γ-methacryloxypropylmethyldimethoxysilane, γ-methacryloxypropylmethyldiethoxysilane, γ-mercaptopropylmethyldimethoxysilane, γ-mercaptopropylmethyldiethoxysilane, methylvinyldimethoxysilane, methylvinyldiethoxysilane, and the like.

As the silane compound, it is also possible to use commercially available silane coupling agent. Specific examples of commercial products include KBM-303, KBM-402, KBM-403, KBE402, KBE403, KBM-1403, KBM-502, KBM-503, KBE-502, KBE-503, KBM-5103, KBM-602, KBM -603, KBM-903, KBE-903, KBE-9103, KBM-573, KBM-575, KBM-9659, KBE-585, KBM-802, KBM-803, KBE-846, KBE-900, and the like manufactured by Shin-Etsu Chemical Co., Ltd.

The component (C) is a polyfunctional epoxy compound. The polyfunctional epoxy-based compound is a compound having two or more epoxy groups in a molecule. The polyfunctional epoxy compound preferably has two or three epoxy groups in a molecule.

Specific examples of the component (C) may include the following polyfunctional epoxy compounds.

Aliphatic epoxy compounds such as 1,6-hexanediol diglycidyl ether, ethylene glycol diglycidyl ether, diethylene glycol diglycidyl ether, triethylene glycol diglycidyl ether, tetraethylene glycol diglycidyl ether, nonaethylene glycol diglycidyl ether, propylene glycol diglycidyl ether, dipropylene glycol diglycidyl ether, tripropylene glycol diglycidyl ether, tetrapropylene glycol diglycidyl ether, nonapropylene glycol diglycidyl ether, neopentyl glycol diglycidyl ether, diglycidyl ether of neopentyl glycol hydroxyhibaric acid ester, trimethylolpropane diglycidyl ether, trimethylolpropane triglycidyl ether, glycerol diglycidyl ether, glycerol triglycidyl ether, diglycerol diglycidyl ether, diglycerol triglycidyl ether, diglycerol tetraglycidyl ether, pentaerythritol diglycidyl ether, pentaerythritol triglycidyl ether, pentaerythritol tetraglycidyl ether, dipentaerythritol tetraglycidyl ether, sorbitol tetraglycidyl ether, diglycidyl ether of tris(2-hydroxyethyl) isocyanurate, and triglycidyl ether of tris(2-hydroxyethyl) isocyanurate, alicyclic epoxy compounds such as isophoronediol diglycidyl ether, bis-2,2-hydroxycyclohexylpropane diglycidyl ether and other, aromatic epoxy compounds such resorcin diglycidyl ether, bisphenol A diglycidyl ether, bisphenol F diglycidyl ether, bisphenol S diglycidyl ether, orthophthalic acid diglycidyl ester, phenol novolac polyglycidyl ether and cresol novolac polyglycidyl ether. As the component (C), a compound having two or three epoxy groups (difunctional or trifunctional epoxy compounds) are preferable from the viewpoint of an adhesive property to an adjacent layer or the lens substrate.

Examples of commercial products of polyfunctional epoxy compounds include "Denacol" series EX-201, EX-211, EX-212, EX-252, EX-313, EX-314, EX-321, EX-411, EX-421, EX-512, EX-521, EX-611, EX-612, EX-614, and EX-614B and the like manufactured by Nagase ChemteX Corporation.

The above curable composition can be prepared by mixing, in addition to the components (A) to (C) described above, optional components such as an organic solvent, a surfactant (leveling agent), and a curing catalyst as necessary with the components described above.

The content of the component (A) is preferably 20 mass% or more, more preferably 30 mass% or more, and still more preferably 40 mass% or more, and preferably 80 mass% or less, more preferably 70 mass% or less, and still more preferably 60 mass% or less when the total amount of solid contents in the curable composition (that is, the total of all components excluding the solvent) is set to 100 mass%.

The content of the component (B) is preferably 5 mass% or more, more preferably 10 mass% or more, and still more preferably 15 mass% or more, and preferably 80 mass% or less, more preferably 70 mass% or less, and still more preferably 60 mass% or less when the total amount of the solid contents in the curable composition is set to 100 mass%.

The amount of the component (C) is, for example, 0 mass% or more, preferably 10 mass% or more, and still more preferably 15 mass% or more, and preferably 50 mass% or less, more preferably 40 mass% or less, and still more preferably 30 mass% or less when the total amount of the solid contents in the curable composition is set to 100 mass%.

The filler/matrix ratio (hereinafter, also simply referred to as "F/M ratio") is preferably 0.5 or more, more preferably 0.6 or more, and still more preferably 0.7 or more and preferably 2.0 or less, more preferably 1.8 or less, and still more preferably 1.5 or less. The F/M ratio means the mass ratio of the component (A) to the component (B) and the component (C) [component (A)/(component (B) + component (C))].

When a composition containing the metal-containing component selected from the group consisting of the silver-containing component and the platinum-containing component is used as the curable composition, it is possible to provide the metal-containing layer as the cured layer obtained by curing such a curable composition between the lens substrate and the inorganic layer.

As a coating method of the curable composition, a known coating method such as a spin coating method, a dipping method, a spray coating method, or the like can be adopted. The same applies to the coating of compositions that are used to form various layers to be described below. A curing treatment can be light irradiation and/or a heating treatment. Curing treatment conditions may be determined according to the types of various components contained in the curable composition or the composition of the curable composition. The film thickness of the cured layer obtained by curing the curable composition is, for example, 1 um or more and 100 um or less. The film thickness of the cured layer is preferably 3 um or more and more preferably 5 um or more from the viewpoint of enhancing the scratch resistance of the surface and is still more preferably 8 um or more and far still more preferably 10 um or more and is preferably 80 um or less, more preferably 60 um or less and still more preferably 50 um or less from the viewpoint of significantly enhancing the scratch resistance, reducing the amplitudes of ripples and significantly obtaining an interference fringe suppression effect.

### (Foundation Layer)

The spectacle lens may have one or more foundation layers between the lens substrate and the inorganic layer. Further, in one aspect, the spectacle lens may have one or more foundation layers between the lens substrate and the cured layer obtained by curing the curable composition, and one or more foundation layers may be the metal-containing layers among the one or more foundation layers and the cured layer. The number of the foundation layers positioned between the lens substrate and the inorganic layer or between the lens substrate and the cured layer obtained by curing the curable composition can be, for example, one layer or two layers. Examples of the foundation layer may include a layer functioning as an interference fringe suppressing layer (for example, an interference fringe suppressing layer called a λ/4 layer) and a primer layer for improving an adhesive property. The spectacle lens may have one or both of the interference fringe suppressing layer and the primer layer between the lens substrate and the inorganic layer or between the lens substrate and the cured layer of the curable composition.

### Interference Fringe Suppressing Layer

The interference fringe suppressing layer is a layer capable of suppressing the generation of interference fringes compared with a case where this layer is not included. A layer having an optical film thickness of 0.2 λ to 0.3 λ for light having a wavelength λ of 450 nm to 650 nm is capable of functioning as the interference fringe suppressing layer. The film thickness of the interference fringe suppressing layer can be, for example, in the range of 50 nm to 100 nm in terms of physical film thickness.

The interference fringe suppressing layer can be formed by, for example, applying a dispersion containing at least metal oxide particles and a resin to the surface of the lens substrate.

The metal oxide particles can play a role of adjusting the refractive index of the interference fringe suppressing layer. Examples of the metal oxide particles include particles of tungsten oxide (for example, WO₃), zinc oxide (ZnO), aluminum oxide (for example, Al₂O₃), titanium oxide (for example, TiO₂), zirconium oxide (for example, ZrO₂), tin oxide (for example, SnO₂), beryllium oxide (for example, BeO), and antimony oxide (for example, Sb₂O₅), and metal oxide particles can be used singly or in combination of two or more thereof. Further, it is also possible to use complex oxide particles of two or more metal oxides. From the viewpoint of optical properties, the particle sizes of the metal oxide particles are preferably in the range of 5 nm to 30 nm.

Examples of a resin for the interference fringe suppressing layer include at least one selected from a polyurethane resin, an acrylic resin, an epoxy resin and the like, a polyurethane resin is preferable, and an aqueous resin composition containing a polyurethane resin, that is, an aqueous polyurethane resin composition is more preferable. An aqueous polyurethane resin composition can be prepared by, for example, urethanizing a polyol compound and an organic polyisocyanate compound, optionally, together with a chain extender in a solvent inert to the reaction and having a high affinity for water to prepare a prepolymer, neutralizing the prepolymer, then dispersing the prepolymer in an aqueous solvent including a chain extender, and increasing the molecular weight. Regarding such an aqueous polyurethane resin composition and a preparation method thereof, for example, paragraphs 0009 to 0013 of Japanese Patent No. 3588375, paragraphs 0012 to 0021 of Japanese Patent Application Publication No. H08-34897, paragraphs 0010-0033 of Japanese Patent Application Publication No. H11-92653, paragraphs 0010 to 0033 of Japanese Patent Application Publication No. H11-92655 and the like can be referred to. Further, as the above aqueous polyurethane resin composition, a commercially available aqueous urethane can be used without change or one that is diluted with an aqueous solvent as necessary can be used. Examples of commercially available aqueous polyurethane resin compositions may include "Evafanol" series (product name, commercially available from Nicca Chemical Co., Ltd.), "SuperFlex" series (product name, commercially available from DKS Co., Ltd.), "Adeka Bontighter" series (product name, commercially available from ADEKA Corporation), "Olester" series (product name, commercially available from Mitsui Chemicals Inc), "Bondic" series and "Hydran" series (product name, commercially available from Dainippon Ink and Chemicals, Inc.), "Impranil" series (product name, commercially available from Bayer AG), "Soflanate" series (product name, commercially available from Japan Soflan Co., Ltd.), "Poiz" series (product name, commercially available from Kao Corporation), "Sanprene" series (product name, commercially available from Sanyo Chemical Industries, Ltd.), "Aizerax" series (product name, commercially available from Hodogaya Chemical Co., Ltd.), and "NeoRez" series (product name, commercially available from AstraZeneca).

The dispersion that is used to form the interference fringe suppressing layer may contain an aqueous solvent. The aqueous solvent means a solvent containing water, is, for example, water or a solvent mixture of water and a polar solvent or the like and preferably water. The solid content concentration in the aqueous resin composition is preferably 1 mass% to 60 mass% and more preferably 5 mass% to 40 mass% from the viewpoint of liquid stability and film formability. The aqueous resin composition may also contain, aside from the resin component, additives such as an anti-aging agent, a dispersant and a plasticizer as necessary. Further, commercially available aqueous resin compositions may be used after being diluted with a solvent such as water, alcohol, or propylene glycol monomethyl ether (PGM).

When an aqueous resin composition containing the metal-containing component selected from the group consisting of the silver-containing component and the platinum-containing component is used as the aqueous resin composition, it is possible to provide the metal-containing layer between the lens substrate and the inorganic layer, between the lens substrate and the cured layer obtained by curing the curable composition or between the lens substrate and the primer layer as the foundation layer (interference fringe suppressing layer) formed from such an aqueous resin composition. The foundation layer (interference fringe suppressing layer) can be formed by applying the aqueous resin composition to a surface to be coated (for example, the surface of the lens substrate) to form a coated layer and drying and removing at least a part of the aqueous solvent by a drying treatment or the like to solidify the coated layer.

### Primer Layer

The primer layer can be, for example, an aqueous resin layer that is formed from an aqueous resin composition containing a resin and an aqueous solvent. The aqueous solvent that is contained in the aqueous resin composition is, for example, water or a solvent mixture of water and a polar solvent or the like and preferably water. The solid content concentration in the aqueous resin composition is preferably 1 mass% to 60 mass% and more preferably 5 mass% to 40 mass% from the viewpoint of liquid stability and film formability. The aqueous resin composition may contain, aside from the resin component, additives such as an anti-aging agent, a dispersant and a plasticizer as necessary. Further, commercially available aqueous resin compositions may be used after being diluted with a solvent such as water, alcohol, or propylene glycol monomethyl ether (PGM).

The aqueous resin composition may include the resin component in a state of being dissolved or dispersed as particles (preferably colloidal particles) in an aqueous solvent. In particular, the aqueous resin composition is desirably a dispersion containing a resin component dispersed in a fine particle form in an aqueous solvent (preferably in water). In this case, the particle sizes of the resin component are preferably 0.3 um or less from the viewpoint of the dispersion stability of the composition. Further, from the viewpoint of stability, it is preferable that the pH of the aqueous resin composition be about 5.5 to 9.0 at 25°C. From the viewpoint of coating suitability, it is preferable that the viscosity at a liquid temperature of 25°C be 5 mPa·S to 500 mPa·S, and more preferably 10 mPa·S to 50 mPa·S. For the resin, reference can be made to the earlier description about the interference fringe suppressing layer.

When an aqueous resin composition containing the metal-containing component selected from the group consisting of the silver-containing component and the platinum-containing component is used as the aqueous resin composition, it is possible to provide the metal-containing layer between the lens substrate and the inorganic layer, between the lens substrate and the cured layer obtained by curing the curable composition, between the interference fringe suppressing layer and the inorganic layer or between the interference fringe suppressing layer and the cured layer obtained by curing the curable composition as the foundation layer (primer layer) formed from such an aqueous resin composition. The foundation layer (primer layer) can be formed by applying the aqueous resin composition to a surface to be coated (for example, the surface of the interference fringe suppressing layer or the surface of the lens substrate) to form a coated layer and drying and removing at least a part of the aqueous solvent by a drying treatment or the like to solidify the coated layer. The film thickness of the primer layer can be, for example, in the range of 0.01 um to 2.0 um.

### <Lens Substrate>

The lens substrate of the spectacle lens may be a plastic lens substrate or a glass lens substrate. For example, the glass lens substrate may be a lens substrate made of inorganic glass. The lens substrate is preferably a plastic lens substrate from the viewpoint of being lightweight, hard to crack and easy to handle. Examples of the plastic lens substrate may include cured products (which are generally called transparent resins) of a styrene resin including a (meth)acrylate resin, a polycarbonate resin, an allylic resin, an allyl carbonate resin such as a diethylene glycol bis(allyl carbonate) resin (CR-39), a vinyl resin, a polyester resin, a polyether resin, a urethane resin obtained by a reaction between an isocyanate compound and a hydroxy compounds such as diethylene glycol, a thiourethane resin obtained by a reaction between an isocyanate compound and a polythiol compound, or a curable composition containing a (thio)epoxy compound having one or more disulfide bonds in a molecule. As the lens substrate, an unstained substrate (colorless lens) may be used, and a stained substrate (stained lens) may be used. For example, the refractive index of the lens substrate may be around 1.60 to 1.75. However, the refractive index of the lens substrate is not limited to the above range and may be within the range or may vertically deviate from the range.
The refractive index in the present invention and the present specification shall herein mean a refractive index for light with a wavelength of 500 nm. In addition, the lens substrate may be a lens with index (so-called prescription lens) or may be a lens without index (so-called non-prescription lens).

The spectacle lens can be various lenses such as a monofocal lens, a multifocal lens, and a progressive power lens. The type of a lens is determined by the surface shapes of both surfaces of a lens substrate. In addition, the surface of the lens substrate may be any of a convex surface, a concave surface, and a flat surface. In a normal lens substrate and a spectacle lens, the object-side surface is a convex surface, and the eyeball-side surface is a concave surface. However, the present invention is not limited thereto.

### <Inorganic Layer>

This spectacle lens has the inorganic layer on the lens substrate. In the present invention and the present description, "inorganic layer" is a layer containing an inorganic substance and is preferably a layer containing an inorganic substance as a main component. The "main component" here refers to a component of which ratio in the layer is highest, and is normally a component of which mass, with respect to the mass of the layer, is about 50% to 100% by mass, preferably about 90% to 100% by mass. The same applies to main components to be described below. The inorganic layer can be a layer laminated on the surface of the lens substrate through at least the metal-containing layer.

The inorganic layer can be a multilayer film of two or more inorganic layers in one aspect. As such a multilayer film, a multilayer film including one or more high refractive index layers and one or more low refractive index layers can be exemplified. Such a multilayer film can be an antireflection film having a property of preventing the reflection of light having a specific wavelength or light in a specific wavelength range or a reflection film having a property of reflecting light having a specific wavelength or light in a specific wavelength range. In the present invention and the present description, "high" and "low" of "high refractive index" and "low refractive index" are relative terms. That is, a high refractive index layer refers to a layer having a higher refractive index than a low refractive index layer included in the same multilayer film. In other words, a low refractive index layer refers to a layer having a lower refractive index than a high refractive index layer included in the same multilayer film. The refractive index of a high refractive index material configuring the high refractive index layer can be, for example, 1.60 or higher (for example, in the range of 1.60 to 2.40), and the refractive index of a low refractive index material configuring the low refractive index layer can be, for example, 1.59 or lower (for example, in the range of 1.37 to 1.59). However, as mentioned above the terms "high" and "low" of the phrases of high refractive index and low refractive index indicate relative magnitude, hence the refractive index of the high refractive index material and that of the low refractive index material are not limited to the above-mentioned ranges.

In concrete terms, examples of the high refractive index material to form the high refractive index layer include one or a mixture of at least two types of oxides selected from the group consisting of zirconium oxide(for example, ZrO₂), tantalum oxide (for example, Ta₂O₅) titanium oxide (for example, TiO₂), aluminum oxide (for example, Al₂O₃), yttrium oxide (for example, Y₂O₃), hafnium oxide (for example, HfO₂) and niobium oxide (for example, Nb₂O₅). Meanwhile, examples of the low refractive index material to form the low refractive index layer include one or a mixture of at least two types of oxides or fluorides selected from the group consisting of a silicon oxide (for example, SiO₂), magnesium fluoride (for example, MgF₂) and barium fluoride (for example, BaF₂). In these examples, the oxides and fluorides are indicated by stoichiometric composition, but the oxides and fluorides including oxygen or fluoride in an amount less than or more than the stoichiometric amount may also be used for the high refractive index material or the low refractive index material.

It is preferable that the high refractive index layer be a film containing the high refractive index material as a main component and the low refractive index layer be a film containing the low refractive index material as a main component. Such a film (for example, a deposited film) can be formed by forming a film using a film formation material (for example, a deposition material) containing the high refractive index material or the low refractive index material as a main component. In some cases, an inevitably-incorporated impurity is included and contained in the film and the film formation material, and other components, for example, other inorganic substances or known additive components playing a role of assisting film formation, may also be contained to an extent that the function of the main component is not impaired. The film can be formed by a known film formation method, from the viewpoint of easiness in film formation, the film is preferably formed by deposition and more preferably formed by vacuum vapor deposition. The antireflection film can be, for example, a multilayer film in which a total of three to 10 high refractive index layers and low refractive index layers are alternately laminated. The film thickness of the high refractive index layer and the film thickness of the low refractive index layer can be determined according to the layer configuration. In detail, a combination of layers to be included in a multilayer film and the film thickness of each layer can be determined by optical design simulation by a known method based on the refractive indexes of film formation materials for forming the high refractive index layer and the low refractive index layer and desired reflection properties and transmission properties that are intended to be brought to spectacle lenses by providing the multilayer film. In addition, in the multilayer film, a layer containing a conductive oxide as a main component (conductive oxide layer), preferably, one or more deposited layers of a conductive oxide formed by deposition using a deposition material containing a conductive oxide as a main component, may be included in any position. The film thickness of each layer of the high refractive index layer and the low refractive index layer in the multilayer film can be, for example, 3 nm to 500 nm, and the total thickness of the multilayer film can be, for example, 100 nm to 900 nm. In the present invention and the present description, the film thickness is a physical film thickness unless particularly otherwise described.

The spectacle lens may include one or more layers that can be normally included in spectacle lenses at any position.

In the spectacle lens, the metal-containing layer can function as an antibacterial layer, which enables antibacterial activity to be exhibited. Further, the inorganic layer functions as, for example, an antireflection film, which makes it possible to bring antireflection performance for light with a specific wavelength or light in a specific wavelength range to spectacle lenses.

### [Spectacles]

One aspect of the present invention relates to spectacles having the spectacle lenses. The details of spectacle lenses included in these spectacles are as described above. Known techniques can be applied to the configuration of the frame and the like for the spectacles.

### [Examples]

Hereinbelow, the present invention will be further described with reference to examples. However, the present invention is not limited to the embodiments shown in the examples.

### [Metal-Containing Component]

"Silver particles" shown in the "metal-containing components" column of Table 1 are silver particles having particle sizes of 2 nm to 5 nm (so-called silver nanoparticles).

"Platinum particles" shown in the "metal-containing components" column of Table 1 are platinum particles having particle sizes of 2 nm to 5 nm (so-called platinum nanoparticles).

"Silver-containing oxide particles" shown in the "metal-containing components" column of Table 1 are ATOMY BALL-(UA) manufactured by JGC Catalysts and Chemicals Ltd. (a water dispersion of particles containing a silver oxide, a silicon oxide and an aluminum oxide, particle sizes: 15 nm). Contents shown in Table 1 are the contents of silver oxides.

### <Production of Reference Lens 1>

### <Plastic Lens Substrate>

As a plastic lens substrate, a plastic lens for spectacles manufactured by HOYA Corporation (trade name: EYNOA, refractive index: 1.67) was used.

### <Interference Fringe Suppressing Layer (λ/4 Layer)>

126 g of 4-hydroxy-4-methyl-2-pentanone (DAA) and 350.5 g of water were added to 305.0 g of methanol, 217.5 g of a thermoplastic resin (SUPERFLEX 170 manufactured by DKS CO. Ltd.), 90.0 g of a sol-like material (ZrO₂ sol) containing HZ-407MH manufactured by Nissan Chemical Corporation dispersed in 40 mass% of methanol and 1.0 g of a leveling agent (Y-7006 manufactured by Dow Toray Co., Ltd.) were further added thereto, and the components were stirred for one hour at a liquid temperature of 20°C and treated with a filter, thereby obtaining a liquid for a λ/4 layer.

The obtained liquid for a λ/4 layer was applied to the washed surfaces of the plastic lens substrate by a spin coating method, dried and solidified for 20 minutes in a dryer having an inner atmosphere temperature of 100°C, thereby forming a λ/4 layer on each of both surfaces of the lens substrate.

### <Primer Layer>

126 g of 4-hydroxy-4-methyl-2-pentanone (DAA) and 350.5 g of water were added to 305.0 g of methanol, 217.5 g of a thermoplastic resin (SUPERFLEX 170 manufactured by DKS CO. Ltd.) and 1.0 g of a leveling agent (Y-7006 manufactured by Dow Toray Co., Ltd.) were further added thereto, and the components were stirred for 24 hours at a liquid temperature of 20°C, thereby obtaining a primer liquid.

The obtained primer liquid was applied on the surfaces of the λ/4 layer by a dipping method, dried and solidified for 20 minutes in a dryer having an inner atmosphere temperature of 100°C, thereby forming a primer layer on each of both surfaces of the lens substrate.

### <Hard Coat Layer>

52 Parts by mass of silica particles, 24 parts by mass of a silane coupling agent (KBM-403 manufactured by Shin-Etsu Chemical Co., Ltd., γ-glycidoxypropyltrimethoxysilane) and 24 parts by mass of a polyfunctional epoxy compound (DENACOL EX-321 manufactured by Nagase ChemteX Corporation, trimethylolpropane polyglycidyl ether) were mixed together, thereby preparing a hard coat liquid.

The prepared hard coat liquid was applied to the surfaces of the primer layer provided on both surfaces of the lens substrate by a spray coating method, preliminarily cured by being heated in a heating furnace having an inner atmosphere temperature of 75°C for 20 minutes and then mainly cured by being heated at 110°C for two hours after the inner atmosphere temperature of the heating furnace was increased to the same temperature, thereby forming a hard coat layer on each of both surfaces of the lens substrate.

### <Inorganic Layer (Multilayer Antireflection Film)>

Next, the lens substrates on which the hard coat layers were formed was placed in a vapor deposition device, and multilayer antireflection films in which eight SiO₂ layers and ZrO₂ layers were alternately laminated were formed on the surfaces of the hard coat layers by a vacuum vapor deposition method (total thickness: about 400 nm to 600 nm). The SiO₂ layer is a deposited film formed using silicon oxide as a deposition material, and the ZrO₂ layer is a deposited film formed using zirconium oxide as a deposition material. Each deposition material is a deposition material composed only of the oxide mentioned if an inevitably-incorporated impurity is excluded.

A spectacle lens having the λ/4 layer (film thickness: 0.18 um), the primer layer (film thickness: 0.70 um), the hard coat layer (film thickness: 2.30 um) and the multilayer antireflection film in this order on each of both surfaces of the lens substrate was produced by the above-described steps.

### [Examples 1 to 4 and 7 to 9]

For Examples 1 and 2 for which "λ/4 layer" is entered in the "metal-containing layer" column of Table 1, spectacle lenses were produced by the same method as described about Reference Lens 1 except that the metal-containing component shown in Table 1 was contained in a content shown in Table 1 with respect to a total of 100 mass% (excluding the solvent) of all components of the λ/4 layer liquid in the λ/4 layer liquid.

For Examples 3 and 4 for which "Primer layer" is entered in the "metal-containing layer" column of Table 1, spectacle lenses were produced by the same method as described about Reference Lens 1 except that the metal-containing component shown in Table 1 was contained in a content shown in Table 1 with respect to a total of 100 mass% (excluding the solvent) of all components of the primer liquid in the primer liquid.

For Examples 7 and 8 for which "Hard coat layer" is entered in the "metal-containing layer" column of Table 1, spectacle lenses were produced by the same method as described about Reference Lens 1 except that the metal-containing component shown in Table 1 was contained in a content shown in Table 1 with respect to a total of 100 mass% of all components of the hard coat liquid in the hard coat liquid.

### [Spectacle Lens 2]

A spectacle lens was produced by the method described about Reference Lens 1 except that the hard coat liquid was prepared by mixing 44 parts by mass of silica particles, 39 parts by mass of a silane coupling agent (KBM-403 manufactured by Shin-Etsu Chemical Co., Ltd., γ-glycidoxypropyltrimethoxysilane) and 17 parts by mass of a polyfunctional epoxy compound (DENACOL EX-321 manufactured by Nagase ChemteX Corporation, trimethylolpropane polyglycidyl ether).

### [Examples 5 and 6]

A spectacle lens was produced by the method described about Reference Lens 2 except that the metal-containing component shown in Table 1 was contained in a content shown in Table 1 with respect to a total of 100 mass% of all components of the hard coat liquid in the hard coat liquid.

### [Test for Antibacterial Activity]

A test for antibacterial activity was performed according to JIS Z 2801:2012. For Examples 1 to 4 and 7 to 9, Reference Lens 1 was used as a reference sample, and, for Examples 6 and 7, Reference Lens 2 was used as a reference sample.

The evaluation results of antibacterial activity shown in the "initial" column of Table 1 are results obtained by evaluating the antibacterial activity of test pieces cut out from spectacle lenses on which neither a light fastness test nor a water resistance test had been performed by the following method.

Regarding the light fastness of antibacterial activity shown in Table 1, a light fastness test of classification 1 described in the light fastness test chapter of the persistence test method (published in 2018) by The Society of International sustaining growth for Antimicrobial Articles (SIAA) was performed on a test piece cut out from each spectacle lens and the antibacterial activity was evaluated by the following method.

Regarding the water resistance of antibacterial activity, a water resistance test of classification 1 described in the water resistance test chapter of the persistence test method (published in 2018) by The Society of International sustaining growth for Antimicrobial Articles (SIAA) was performed on a test piece cut out from each spectacle lens and the antibacterial activity was evaluated by the following method.

After 50 mm×50 mm test pieces (test pieces cut out from each of the spectacle lenses of each of the examples and the reference sample thereof) were placed in a sterilized petri dish, 0.4 mL of a bacterial solution containing 1.0×10⁵ to 4.0×10⁵ test bacteria (Staphylococcus aureus or Escherichia coli) was dropped onto a center of each sample and covered with a polyethylene film cut into 40 mm×40 mm. After this petri dish was cultured at a relative humidity of 90% or more for 24 hours, a viable cell count per 1 cm² was measured, and the following antibacterial activity values were calculated.

### Antibacterial activity value=Ut-At≥2.0

Ut: Average value of logarithmic number of viable cells per 1 cm² after 24-hour culture of unprocessed test piece (reference sample)
At: Average value of logarithmic number of viable cells per 1 cm² after 24-hour culture of antibacterial processed test piece (example sample)

The Society of International sustaining growth for Antimicrobial Articles (SIAA) regulates that, in a case where the antibacterial activity value is two or more, products have an antibacterial efficacy. Therefore, for each spectacle lens, the antibacterial activity was determined from the value of the antibacterial activity value obtained above by the following determination standards.
OK: Antibacterial activity value is 2.0 or more
NG: Antibacterial activity value is less than 2.0

**[Table 1]**

| | Metal-containing layer | Metal-containing component | | | Film thickness of metal-containing layer (µm) | Antibacterial activity | | | | | |
|---|---|---|---|---|---|---|---|---|---|---|---|
| | | | | | | Staphylococcus aureus | | | E. coli | | |
| | | Silver particles | Platinum particles | Silver-containing oxide particles | | Initial | Water resistance | Light fastness | Initial | Water resistance | Light fastness |
| Example 1 | λ /4 layer | 0.70% | | | 0.18 | OK | OK | OK | OK | OK | OK |
| Example 2 | λ /4 layer | 0.63% | 0.07% | | 0.18 | OK | OK | OK | OK | OK | OK |
| Example 3 | Primer layer | | | 0.50% | 0.70 | OK | OK | OK | OK | OK | OK |
| Example 4 | Primer layer | 0.045% | 0.05% | | 0.70 | OK | OK | OK | OK | OK | OK |
| Example 5 | Hard coat layer | 0.030% | | | 2.60 | OK | OK | OK | OK | OK | OK |
| Example 6 | Hard coat layer | | | 0.04% | 2.60 | OK | OK | OK | OK | OK | OK |
| Example 7 | Hard coat layer | | | 0.07% | 2.30 | OK | OK | OK | OK | OK | OK |
| Example 8 | Hard coat layer | | 0.007% | 0.050% | 2.30 | OK | OK | OK | OK | OK | OK |
| Example 9 | Hard coat layer | | 0.007% | 0.040% | 2.30 | OK | OK | OK | OK | OK | OK |

From the results of Table 1, it is possible to confirm that each of the spectacle lenses of Examples 1 to 9 is excellent in terms of light fastness and water resistance of antibacterial activity.

### [Evaluation Regarding Joint Use of Silver-Containing Component and Platinum-Containing Component]

### <Evaluation Regarding Yellowing Suppression>

Spectacle lenses containing a platinum-containing component in a different content were produced by the method described about Example 5 except that the content of the platinum-containing component was changed to 0.008 mass%, 0.010 mass%, 0.020 mass%, 0.050 mass% and 0.100 mass%.

For each of the produced spectacle lenses, the YI value (initial YI value) was measured.

After that, a cycle of irradiating the spectacle lens with 0.20 W ultraviolet rays for four hours in a QUV UV fluorescent tube-type accelerated weathering tester manufactured by Q-Lab and then placing the spectacle lens in a high-humidity environment (relative humidity: 90%) for four hours was repeated 21 times, and the YI value (YI value after QUV) was measured.

The YI value was measured by the following method.

The direct incidence transmission spectroscopic characteristics at the optical center on the object-side surface (convex surface side) are measured from the object side of the spectacle lens. The YI value is obtained from the measurement results of the direct incidence transmission spectroscopic characteristics thus obtained according to JIS K 7373: 2006. Specifically, X, Y, and Z are calculated from the transmission spectrum obtained by measurement of the direct incidence transmission spectroscopic characteristics according to the formula (3) of JIS Z 8701:1999, and the YI value for the D65 light source was calculated from the calculation formula in Section 6.1 of JIS K 7373:2006.

For each of the spectacle lenses containing the silver-containing component and containing the platinum-containing component in a different content, ΔYI = YI value after QUV - initial YI value was calculated. The YI value is an index of yellowing, and it can be said that, as the ΔYI value becomes smaller, yellowing after the QUV accelerated weathering test occurs less.

Fig. 1 is a graph in which the ΔYI is plotted with respect to the contents of the platinum-containing component. From Fig. 1, it is possible to confirm that, as the amount of the platinum oxide-containing component contained in the spectacle lens increases, the ΔYI value becomes smaller, that is, yellowing is suppressed in the spectacle lenses containing the silver-containing component.

### <Evaluation Regarding Film Performance>

Spectacle lenses containing a platinum-containing component in a different content were produced by the method described about Example 7 except that the content of the platinum-containing component was changed to 0.008 mass%, 0.010 mass%, 0.020 mass%, 0.050 mass% and 0.100 mass%.

For each of the produced spectacle lenses, various items shown in Table 2 were evaluated by the following methods. From the evaluation results shown in Table 2, it is possible to confirm that the film performance does not deteriorate according to the addition of the platinum-containing component and an increase in the addition amount thereof.

### (Initial Adhesive Property)

The adhesive property was evaluated based on JIS K 5600-5-6 (ISO 2409: 1992). Specifically, a 10×10 grid notch was created on the surface of each spectacle lens, a peeling test was performed three times using cellophane pressure-sensitive adhesive tape, and remaining grids out of 100 were counted.

### (Initial Wear Resistance)

Steel wool #0000 (manufactured by Nihon Steel Wool Co., Ltd.) to which a load of 1 kg was applied was reciprocated on the surface of the spectacle lens 20 times, and then the scratch resistance of the surface of the spectacle lens was visually determined. Determination standards are as described below. "UA-A" in Table 2 indicates that, as a result of performing wear resistance evaluation by the above-described method on a plurality of spectacle lenses produced by the same method, the determination results were A in an extremely small number of spectacle lenses, and the determination results were UA in the remaining spectacle lenses.
UA: Scratches are rarely formed.
A: 1 to 10 scratches are formed.
B: 11 to 30 scratches are formed.
C: The surface becomes dim.

### (Adhesive Property and Wear Resistance After Constant Temperature and Humidity Test)

The adhesive property and wear resistance of the spectacle lens after being stored in an environment having a temperature of 40°C and a relative humidity of 90% for 168 hours were evaluated by the above-described methods.

### (Adhesive Property and Wear Resistance After Immersion in Warm Water)

The adhesive property and wear property of the spectacle lens after being immersed in warm water having a water temperature of 50°C for 48 hours in a constant temperature and humidity test were evaluated by the above-described methods.

### (Adhesive Property and Wear Resistance After QUV Accelerated Weathering Test)

A cycle of irradiating the spectacle lens with 0.20 W ultraviolet rays for four hours in a QUV UV fluorescent tube-type accelerated weathering tester manufactured by Q-Lab and then placing the spectacle lens in a high-humidity environment (relative humidity: 90%) for four hours was repeated 21 times, and then the adhesive property was evaluated by the above-described method.

**[Table 2]**

| Platinum component content | Initial | | After constant temperature and humidity test | | After immersion in warm water | | After OUV accelerated light fastness test |
|---|---|---|---|---|---|---|---|
| | Adhesive property | Wear resistance | Adhesive property | Wear resistance | Adhesive property | Wear resistance | |
| 0.008% | 100/100 | UA | 100/100 | UA-A | 100/100 | UA-A | 100/100 |
| 0.010% | 100/100 | UA | 100/100 | UA-A | 100/100 | UA-A | 100/100 |
| 0.020% | 100/100 | UA | 100/100 | UA-A | 100/100 | UA-A | 100/100 |
| 0.050% | 100/100 | UA | 100/100 | UA-A | 100/100 | UA | 100/100 |
| 0.100% | 100/100 | UA | 100/100 | UA | 100/100 | UA-A | 100/100 |

Finally, the above aspects are summarized.

According to one aspect, provided is a spectacle lens having a lens substrate and an inorganic layer and further having a metal-containing layer between the lens substrate and the inorganic layer, in which a metal that is contained in the metal-containing layer is one or more metals selected from the group consisting of silver and platinum.

The spectacle lens can be a spectacle lens being excellent in terms of light fastness and water resistance of antibacterial activity.

In one aspect, the metal-containing layer may contain at least a silver-containing component.

In one aspect, the metal-containing layer may further contain a platinum-containing component.

The metal-containing layer containing a silver-containing component further contains a platinum-containing component, which makes it possible to suppress the discoloration of the spectacle lens caused by long-term use.

In one aspect, the spectacle lens may have the lens substrate, a cured layer obtained by curing a curable composition and the inorganic layer in this order, and this cured layer can be the metal-containing layer.

In one aspect, the spectacle lens may have the lens substrate, a foundation layer, a cured layer obtained by curing a curable composition and the inorganic layer in this order, and this foundation layer can be the metal-containing layer.

In one aspect, the number of the foundation layers in the spectacle lens can be two or more, and at least one of the foundation layers can be the metal-containing layer.

According to one aspect, spectacles including the spectacle lens are provided.

Two or more of the various aspects and various forms described in the present specification can be combined in any combination.

It should be considered that the embodiments described this time are examples in all respects and not restrictive. The scope of the present invention is indicated by the scope of the claims rather than the above description, and is intended to include all modifications within the meaning and scope equivalent to the scope of the claims.

### [Industrial Applicability]

One aspect of the present invention is useful in the manufacturing fields of spectacle lenses and spectacles.

## Claims

1. A spectacle lens comprising:
a lens substrate; and
an inorganic layer,
the spectacle lens further comprising:
a metal-containing layer between the lens substrate and the inorganic layer,
wherein a metal that is contained in the metal-containing layer is one or more metals selected from the group consisting of silver and platinum.

2. The spectacle lens according to claim 1,
wherein the metal-containing layer contains at least a silver-containing component.

3. The spectacle lens according to claim 2,
wherein the metal-containing layer further contains a platinum-containing component.

4. The spectacle lens according to any one of claims 1 to 3,
wherein the spectacle lens has the lens substrate, a cured layer obtained by curing a curable composition and the inorganic layer in this order, and
the metal-containing layer is the cured layer.

5. The spectacle lens according to any one of claims 1 to 3,
wherein the spectacle lens has the lens substrate, a foundation layer, a cured layer obtained by curing a curable composition and the inorganic layer in this order, and
the metal-containing layer is the foundation layer.

6. The spectacle lens according to claim 5,
wherein the number of the foundation layers is two or more, and at least one of the foundation layers is the metal-containing layer.

7. Spectacles comprising:
the spectacle lenses according to any one of claims 1 to 6.
